# EUROPEAN PATENT APPLICATION

(11) **EP 4 410 613 A1**
(43) Date of publication of application: **07.08.2024**
(21) Application number: 23154629.2
(22) Date of filing: 02.02.2023
(51) Int. Cl.: B60T 8/172, G01P 3/48, B60T 17/22, F16D 66/00

(54) **SIGNAL PROCESING METHOD, SENSOR AND USE OF A SENSOR FOR DETERMINING ROTATIONAL SPEEDS AND/OR ROTATIONAL POSITIONS OF WHEELS OF RAIL VEHICLE**

(71) Applicant: KNORR-BREMSE Systeme für Schienenfahrzeuge GmbH, 80809 München (DE)
(72) Inventor: KAKONYI, Robert, 6300 Kalocsa (HU); BUSZNYAK, Imre, 1148 Budapest (HU)

(57) **Abstract**

The present invention relates to a signal processing method and a sensor (S), which comprises a first winding (1) being provided on a wheel (W), wherein the first winding (1) can include any angle (θ) with a reference position (R),
a second winding (2), and a third winding (3), wherein the directions of the second winding (2), and a third winding (3) are not parallel;
a signal generation and processing unit (8), adapted to provide an AC voltage to the first winding (1) and to receive the a first induced voltage (Vs) of the second winding (2) and the second induced voltage (Vs) of the third winding (2).

With such system, wheel speeds / positions can be measured very accurately.

In a further aspect the invention relates to a use of said sensor for determining rotational speeds of wheels of a rail vehicle (V) and/or determining wheel slips of wheels of a rail vehicle.

## Description

The present invention deals with a diagnostic system for a rail vehicle, with a fast and robust wheel speed and position calculation.

For certain applications of rail vehicles, the wheel speed and the wheel position has to be determined very accurately.

From prior art, document EP 3 963 617 A1 is known.

Such system contains a motor for driving a drive shaft, and also a feedback system which is designed to determine at least one new value for the precision of the drive shaft and to generate feedback signal on the basis of the at least one value. A controller is designed to influence the operation of the motor based on the feedback signal. The motor can be used for various applications.

For example, in a wheel slide protection system of a train comprising single vehicles, a system using a pole-wheel-based encoder works well according to EN norms. However, such pole-wheel-based encoder has certain limitations.

At first, such system does not detect the direction of rotation, which may lead to challenges to obtain directional information for certain applications.

Further, the signal quality can depend on the actual speed of the train. Below 3 km/h, the vehicle speed signal can be unreliable or even unavailable. However, such information have to be available for precision stopping performed by braking, in particular for metro stations with doors on the platform.

Furthermore, if the latency of the signal processing is too large, fast interventions (e.g. targeted use of a microslip or keeping the slip value at a maximum of the adhesion growth) cannot be used. However, a lower latency is desired, which leads to a more precise control and a more reproducible brake distance.

Furthermore, if the train is starting from a standstill, the torque control can be very challenging due to slipping wheels. However, also such applications can benefit from better latency performance.

In recent developments, electromechanical actuators are becoming more popular. For example, they do not need air supply to be operable.

Furthermore, for electromechanical actuators, the latency of actuation is also lower. The total latency of the brake system (speed detection, signal processing, control decision, actuation) can be decreased significantly. However, the limiting factor is the speed sensor.

Also, an automatic train operation becomes more popular, however has very strict requirements with regard to the stopping positions. Such automatic train operation requires a high quality speed signal in case of slow moving wheels. As an example with numerical parameters of the current design: the path length passed by the train can be 0.62 m if the deceleration is 0.8 m/s², and the starting speed is 1 m/s (this is a typical specification).

If the stopping is only controlled by one brake unit, a certain distance (until standstill) shall be passed by the train in a practical blind mode. This is the main disadvantage of precision stopping only by a brake. In current state of the art one possible implementation of the precision stopping is combined usage of the traction and brake system of the train. Brake systems can be commanded for certain amount of brake force interaction used for precise control in the final position and the traction is controlled to achieve the desired stopping position, however, in such a case, the wear of the brake system becomes significant, and a lot of energy can be consumed.

Hence, an objective technical problem to be solved by the present invention can be seen in providing a signal processing method and a sensor which are able to precisely measure rotation speeds and/or rotation positions for wheels, in particular wheels of train vehicles.

The objective technical problem is solved by a signal processing method according to claim 1, a sensor according to claim 10 and a brake system according to claim 16. Furthermore, preferable uses of a sensor are mentioned in claim 17.

Further advantageous embodiments of the present invention are subject-matter of the dependent claims.

A signal processing method for determining an angular position, in particular for a wheel of the rail vehicle, comprises the following steps:
a) Excitation of a first winding by an AC voltage, the first winding being provided on a wheel, wherein the first winding can include any angle with a reference position;
b) Measuring a first induced voltage in a second winding, and delivering said induced voltage to a signal generation and processing unit;
c) Measuring a second induced voltage in a third winding, and delivering said induced voltage to a signal generation and processing unit;
d) Determining a rotation angle of the wheel in the signal generation and processing unit;
e) Calculating a rotation speed and/or rotation position of the wheel.

The middle axes of the second winding and the third winding are not parallel in order to be able to measure two different induced voltages.

The second winding and the third winding are positioned besides the wheel.

With such system, very precise positions of a wheel can be obtained, in particular the brake performance of a train can be significantly improved, and real-time online track diagnostics are possible. The rotation speed and the rotation position of the wheel can be calculated very easily, as - for the case of the middle axes of the second winding and the third winding being orthogonal - the first induced voltage provides a sine signal, and the second induced voltage provides a cosine signal. The induced voltages in the first winding and the second winding are equal to the value of the reference voltage (induced voltage) multiplied by the sine or cosine of the angle of the wheel from a fixed reference point. The sensor provides two voltages the ratio of them represents the absolute position of the input shaft (sin θ / cos θ = tan θ, where θ is the shaft angle). The advantage of the sine/cosine ratio is that the shaft angle is absolute. Even if the shaft is rotated during a power loss, the resolver can report its new position value when power is restored.

Furthermore, such application leads to a low latency, which leads to a low latency electromechanical brake actuator being the prerequisite for precision stopping performed only by the brake system. The reproducibility of the brake distance is improved due to the lower latency closed loop control system driven by the absolute position of the vehicle. A lower performance or lower parameter stability of the used materials of the pad and the disc of a brake can be compensated to have the same braking performance even with cheaper materials.

Furthermore, the higher time resolution and the low latency of the wheel speed/position sensor enables the track diagnostics without affecting the brake distance of the vehicle. The adhesion curve (friction coefficient between the wheel and rail as a function of wheel slip) can be measured or even derived during operational braking or test braking. Test braking can be initiated by a driver. The measured adhesion curve can be reported to the operator, who can then decide if there is any need for track cleaning. During operational braking, an artificial wheel slip event can be generated to record the rotation speed profile of the wheel and derive the adhesion curve. The sensor arrangement according to the present invention can even be installed as additional feature to an existent pole-wheel-based encoder.

The signal generated by the sensor arrangement according to the present invention can be compared in real time with the signal of a pole-wheel sensor, thus the new technology can be validated in real time without affecting the safety of the vehicle in retrofit. The signal of the sensor arrangement according to the present invention is advantageously used for a limited number of specific applications, and in particular precision stopping, adhesion measurement. Also, speed information of below 3 km/h can be made available, and such speeds are frequently occurring when a braking of a system occurs.

The above described sensor is preferably a resolver. Resolvers, being a very specific sensor type, having a wide range of use in various applications, in particular if environmental conditions are harsh. Resolvers are very robust sensors and are able to provide precise angular positions in the milliradian resolution. Dependent on the signal processing algorithm, the output of the sensor can be the rotation speed and/or the rotation position. The precise output can be beneficial for precise stopping functionality, as for achieving a 1 cm position resolution, a 3.2 MRAD angular resolution is required for a 0.5 m wheel radius.

Preferably, the excitation current is provided by the signal generation processing unit, filtered by a first filter, and delivered to the first winding in step a).

The filter has the functionality of high voltage protection of the signal generation and processing unit. The filter block can also implement bandpass filtration to eliminate any DC offsets from the measured or generated signals.

Hence, also the first induced voltage can be filtered by a second filter, preferably, before being delivered to the signal generation processing unit. The same being true for the second induced voltage, which is filtered by a third filter before being delivered to the signal generation and processing unit.

Preferably, the excitation of the first winding by an AC voltage is performed with more than one frequency. This makes the whole sampling more robust.

More preferably, the excitation of the first winding by an AC voltage is performed with more than one frequencies to estimate the axle or wheel speed/ axle or wheel position and another number of frequencies to search for less noisy frequency ranges. This also results in a very robust signal processing.

Preferably, the sampling frequency of the evaluation of the first induced voltage and the second induced voltage is approximately two times the excitation frequency of the excitation current. Hence, a leakage effect to the FFT algorithm used by the signal generation and processing unit can be avoided. The excitation for sampling can then be precisely synchronized.

Preferably, the evaluation algorithm is a correlation search after Fourier transformation of the first and second and third winding channels. Hence, frequency ranges with lowest external noise disturbances can be used.

Also, a degraded mode is possible, which further increases the safety - if a part of the wires breaks, the signal processing method can switch to a single component mode. The position and the speed can be sampled by using one channel, that means only the second winding or third winding. If the excitation line (first winding) breaks, then the coupling of the first winding and second winding channels can be utilized to estimate the axial position or speed with degraded mode with lower performance.

Preferably, the signal processing method comprises the two following further steps:
f) Performing a braking of the wheel;
g) Measuring the velocity of the whole vehicle, and calculating the slip of the wheel based on the rotation speed of the wheel and the velocity of the whole vehicle.

Herein, a slip behavior of the wheel can be determined, and the adhesion curve (friction coefficient between the wheel and track as a function of wheel slip) can be measured or derived during the operational braking or testing.

Preferably, the middle axes of the second winding and the third winding are essentially orthogonal, preferably orthogonal. Such configuration makes signal generation very robust. The angle calculation is hence performed using the projections of a rotating vector. If the components are not perpendicular calculation can be still performed, but the performance would be expectedly lower.

Preferably, the the coil checking unit communicates with the signal generation and processing unit via a protected data line and transfers diagnostic information, the diagnostic information being used for selecting a suitable signal processing depending on the availability of the first winding, the second winding and/or the third winding.

If one of the windings is broken, the signal generation and processing unit can perform the signal processing via another method which does not need the broken winding. Such alternative signal processing might be less precise, but a complete failure of the wheel speed and position detection can be avoided. This is advantageous regarding safety issues, in particular when being used in a brake system.

More preferably, the signal generation and processing unit provides a quality parameter output signal which describes the reliability of the position and speed signals in real time. This even more is advantageous regarding safety issues.

A sensor according to the present invention comprises:
a first winding being provided on a wheel, wherein the first winding can include any angle with a reference position;
a second winding, and a third winding, wherein the directions of the second winding, and a third winding are not parallel;
a signal generation and processing unit, adapted to provide an AC voltage to the first winding and to receive the first induced voltage of the second winding and the second induced voltage of the third winding.

Preferably, a rotary transformer is provided between the signal generation and processing unit and the first winding. The rotary transformer is a functional unit to forward the excitation signal from the static part to the axle-mounted rotating excitation coil of the sensor. This can provide a higher precision compared to e.g. a carbon brush, as there is no wear effect.

Preferably, a first filter is provided somewhere between the signal generation and processing unit and the first winding. More preferably, a second filter is provided between the signal generation and processing unit and the second winding, and/or a third filter is provided between the signal generation and processing unit and the third winding. These filters have the following advantages: The signal generation and processing can be protected from higher overvoltage overloads, and furthermore, different signal filtering features can be implemented, by passing only the frequencies used by the system for excitation of the sensor. The biggest disturbances of the sensor signal and processing unit is an EMC signal from higher voltage power supply for the train or another train passing on the parallel track. The inventive sensor arrangement has a safety-related function of the brake system, as it ensures by performing of filtering that only values which are relevant for the wheel to be observed are used.

Preferably, the first filter, the second filter and/or the third filter is/are adapted to implement bandpass filtration in order to eliminate any DC offsets from the measured or generated signals. This makes the measurement more robust.

Preferably, a wire and coil checking unit is provided, which is adapted to check if wires or the windings are broken. If the wire of the second winding and/or the third winding is broken, then signal generation and processing unit can switch to a single secondary winding based signal processing method. If the first winding is broken, then one of the second winding or third winding is used to provide the excitation signal and the signal processing unit is switched to a different signal processing method to obtain speed and position information.

An inventive brake system for a rail vehicle comprises a sensor arrangement as described above.

Preferable uses of the sensor according to the present invention are for determining rotational speeds and/or rotational positions of a wheel of a rail vehicle, and even for determining wheel slips of wheels of a rail vehicle.

A preferred embodiment of the present invention is described by appended figures.
- Fig. 1: shows a schematic view of a sensor according to one embodiment of the present invention.
- Fig. 2: shows a schematic view of a sensor according to another embodiment of the present invention.

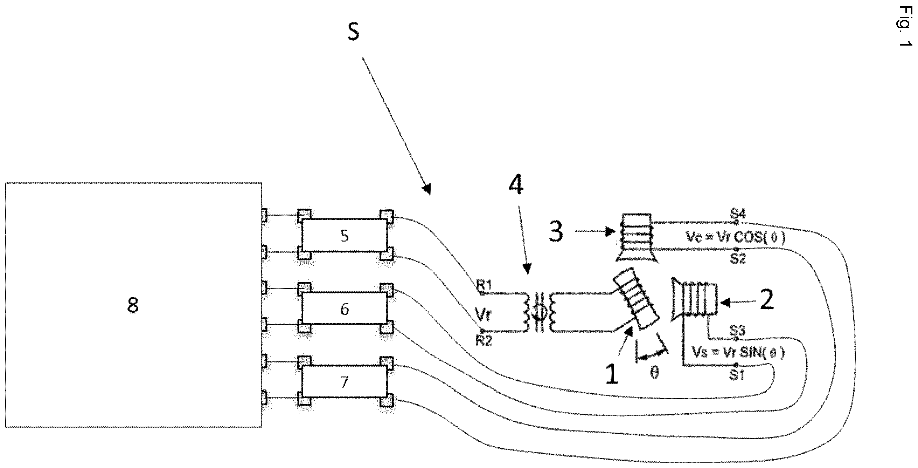

Fig. 1 shows a basic embodiment of the present invention. Herein, a first winding 1 is provided on the wheel W (not shown here) of a rail vehicle, this first winding 1 is connected via a fifth terminal R1 and a sixth terminal R2 to a first filter 5, which is connected with a signal generation and processing unit 8. Between the first winding 1 and the fifth terminal R1 and a sixth terminal R2, a rotary transformer 4 is provided.

Furthermore, a second winding 2 is provided outside of the wheel, by means of which a sin signal can be measured (Vs = Vr x sin θ), and furthermore, a third winding 3 is provided, which measures a cosine signal (Vc = Vr x cos θ). The second winding 2 is connected with a respective first terminal and third terminal S1 and S3 to a third filter S3, which is again connected to the signal generation and processing unit 8. Also the third winding 3 is provided with a second and fourth terminal S2 and S4 to a second filter 6, which is connected with the signal generation and processing unit 8.

Hence, separated filters 5, 6, 7 are used for each winding 1, 2, 3. The signal generation and processing unit 8 is the main signal processing unit. It has separated outputs for each winding, i.e. the first winding 1 is a reference winding, the second winding 2 is a sine winding, and the third 3 winding is a cosine winding.

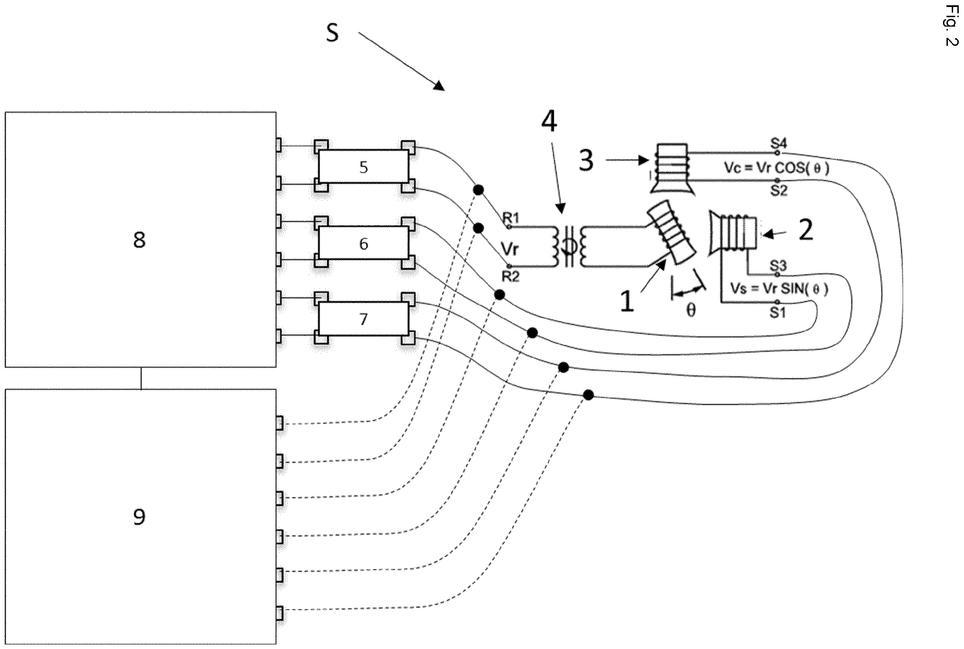

In Fig. 2, a second embodiment is shown. Herein, a wire and coil checking unit 9 is provided. The wire and coil checking unit 9 is a completely separated electronic component which checks that the wires of the first winding 1, second winding 2 and third winding 3 and not broken.

For this purpose the wire and coil checking unit 9 uses a small DC current. The first filter 1, second filter 2 and third winding 3 are separating the signal generation and processing unit 8 and the wire and coil checking unit 9.

However, the wire and coil checking unit 9 can report to the wire and coil checking unit 9 which line is broken.

If one or more of the wires of one winding (first winding 1, second winding 2 and/or third winding 3) is broken, then the signal generation and processing unit 8 can still operate in a degraded mode. Some speed and position information can be still extracted by neglecting signal from the winding (first winding 1, second winding 2 and/or third winding 3) with broken wire.

If the wire of the excitation winding (second winding 2 and/or third winding 3) is broken, then wire and coil checking unit 9 can switch one of the second winding 2 or third winding 3 to the excitation channel (first winding 1) and switch to a different signal processing method to obtain speed and position information.

The present invention is not limited to the embodiment above.

Even more windings can be used by the sensor, this would make the sensing even more robust.

Also, each angle between the second winding 2 and the third winding 3 can be used - however, the middle axes of the second winding 2 and the third winding 3 cannot be parallel.

### LIST OF REFERENCE SIGNS

- S: Sensor (resolver)
- W: Wheel
- R: Reference position

- 1: First winding
- 2: Second winding
- 3: Third winding
- 4: Rotary transformer
- 5: First filter
- 6: Second filter
- 7: Third filter
- 8: Signal generation and processing unit
- 9: Wire and coil checking unit

- S1: First terminal
- S2: Second terminal
- S3: Third terminal
- S4: Fourth terminal
- R1: Fifth terminal
- R2: Sixth terminal

- AC: Induced voltage
- Vr: First induced voltage
- Vc: Second induced voltage

## Claims

1. Signal processing method for determining an angular position, in particular for a wheel of a rail vehicle, comprising the following steps:
a) Excitation of a first winding (1) by an AC voltage (Vr), the first winding (1) being provided on a wheel (W), wherein the first winding (1) can include any angle (θ) with a reference position (R);
b) Measuring a first induced voltage (Vs) in a second winding (2), and delivering said induced voltage (Vs) to a signal generation and processing unit (8);
c) Measuring a second induc ed voltage (Vc) in a third winding (3), and delivering said induced voltage (Vc) to the signal generation and processing unit (8), wherein the middle axes of the second winding (2) and the third winding (3) are not parallel;
d) Determining a rotation angle (θ) of the wheel (W) in the signal generation and processing unit (8);
e) Calculating a rotation speed and/or rotation position of the wheel (W).

2. Signal processing method according to claim 1, wherein an excitation current (Vr) is provided by the signal generation and processing unit (8), filtered by a first filter (5) and delivered to the first winding (1) in step a), and/or
the first induced voltage (Vs) is filtered by a second filter (6) before being delivered to the signal generation and processing unit (8), and/or
the second induced voltage (Vc) is filtered by a third filter (7) before being delivered to the signal generation and processing unit (8).

3. Signal processing method according to one of the previous claims, wherein the excitation of the first winding (1) by an AC voltage (Vr) is performed with more than one frequency.

4. Signal processing method according to claim 3, wherein the excitation of the first winding (1) by an AC voltage (Vr) is performed with N frequencies to estimate the axle speed/position and M number of frequencies to search for less noisy frequency ranges.

5. Signal processing method according to one of the previous claims, wherein the sampling frequency of the evaluation of the first induced voltage (Vs) and the second induced voltage (Vc) is approximately two times the excitation frequency of the excitation current (Vr).

6. Signal processing method according to one of the previous claims, further comprising the following steps:
f) Performing a braking of the wheel (W);
g) Measuring the velocity of the whole vehicle (V), and calculating the slip of the wheel (W) based on the rotation speed of the wheel (W) and the velocity of the whole vehicle (V).

7. Signal processing method according to one of the previous claims, wherein a wire and coil checking unit (9) checks if wires are broken in predetermined intervals.

8. Signal processing method according to claim 7, wherein the coil checking unit (9) communicates with the signal generation and processing unit (8) via a protected data line and transfers diagnostic information, the diagnostic information being used for selecting a suitable signal processing depending on the availability of the first winding (1), second winding (2) and/or third winding (3).

9. Signal processing method according to one of the previous claims, wherein the signal generation and processing unit (8) provides a quality parameter output signal which describes the reliability of the position and speed signals in real time.

10. Sensor (S), comprising:
a first winding (1) being provided on a wheel (W), wherein the first winding (1) can include any angle (θ) with a reference position (R)
a second winding (2), and a third winding (3), wherein the directions of the second winding (2), and the third winding (3) are not parallel;
a signal generation and processing unit (8), adapted to provide an AC voltage to the first winding (1) and to receive a first induced voltage (Vs) of the second winding (2) and a second induced voltage (Vs) of the third winding (2).

11. Sensor (S) according to claim 10, wherein a first filter (5) is provided somewhere between the signal generation and processing unit (8) and the first winding (1), and/or
wherein a second filter (6) is provided between the signal generation and processing unit (8) and the second winding (2), and/or
a third filter (7) is provided between the signal generation and processing unit (8) and the third winding (3).

12. Sensor (S) according to one of claims 10 or 11, wherein the first filter (5) and/or the second filter (6) and/or the third filter (7) is adapted to implement band pass filtration to eliminate any DC offsets from the measured or generated signals.

13. Sensor (S) according to one of the previous claims 10 to 12, wherein a wire and coil checking unit (9) is provided, which is adapted to check if wires are broken.

14. Brake system (B) for a rail vehicle, comprising at least one sensor (S) according to one of claims 10 to 13.

15. Use of a sensor (S) according to one of claims 10 to 13 for determining rotational speeds and/or rotational positions of wheels (W) of a rail vehicle (V) and/or for determining wheel slips of wheels (W) of a rail vehicle (V).
